# EUROPÄISCHE PATENTSCHRIFT

(11) **EP 2 550 187 B1**
(45) Veröffentlichungstag und Bekanntmachung des Hinweises auf die Patenterteilung: **18.12.2013**
(21) Anmeldenummer: 11703435.5
(22) Anmeldetag: 07.02.2011
(51) Int. Cl.: B60S 3/00

(54) **EINFAHRHILFE UND FAHRZEUGBEHANDLUNGSANLAGE**
DRIVE-IN AID AND VEHICLE TREATMENT SYSTEM
AUXILIAIRE D'ACCES ET INSTALLATION DE TRAITEMENT DE VEHICULE

(30) Priorität: 22.03.2010 DE 102010016068
(43) Veröffentlichungstag der Anmeldung: 30.01.2013
(73) Patentinhaber: WashTec Holding GmbH, 86153 Augsburg (DE)
(72) Erfinder: AUER, Robert, 86391 Augsburg (DE)
(74) Vertreter: Charrier, Rapp & Liebau
(86) Internationale Anmeldenummer: PCT/EP2011/051744
(87) Internationale Veröffentlichungsnummer: WO 2011/117015

(56) Entgegenhaltungen:
- US-A- 3 832 953
- US-A1- 2006 219 127
- US-A1- 2006 225 601
- US-A1- 2008 028 974

## Beschreibung

Die Erfindung betrifft eine Einfahrhilfe nach dem Oberbegriff des Anspruchs 1 sowie eine Fahrzeugbehandlungsanlage nach dem Oberbegriff des Anspruchs 14.

Eine als Fahrzeugwaschanlage ausgebildete Fahrzeugbehandlungsanlage mit einer Fördereinrichtung zum Transport eines zu behandelnden Fahrzeugs in einer Transportrichtung durch die Fahrzeugbehandlungsanlage ist aus der DE 20 02 565 bekannt. Die Fördereinrichtung weist dort an einer unendlich umlaufenden Förderkette angeordnete Schlepprollen auf, von denen eine an dem Fahrzeugreifen einer Fahrzeugseite von hinten angreift und das Fahrzeug dann an durch die Fahrzeugwaschanlage schleppt. Um den zu schleppenden Reifen in die zum Schleppen mit der Schlepprolle vorgesehene Fahrspur zu führen, sind im Einfahrbereich der Fördereinrichtung beidseits der Fahrspur in Transportrichtung V-förmig aufeinander zulaufende Führungen vorgesehen, welche ein Einfahrhilfe bilden. Fährt der Reifen an eine dieser Führungen an, wird er in die gewünschte Fahrspur gezwungen. Um den Reifen beim Anfahren an den Führungen möglichst wenig zu beschädigen, sind die Führungselemente als längliche Führungsrollen ausgebildet, deren Drehachsen im wesentlichen parallel zum Fahrzeugwaschanlagenboden und in Transportrichtung V-formig aufeinander zulaufen. Beim Anfahren des Reifens drehen sich dann die Führungsrollen ebenfalls, so dass die Abreibbewegungen an den Reifen und der Reifenseitenwand verringert werden. Fährt der Reifen jedoch zu schnell oder in einem zu steilen Winkel an eine Führungsrolle an, wird der Reifen gequetscht und ggf. beschädigt. Zudem wird durch die Zwangsführung mit den Führungsrollen der auf dem Boden aufliegende Bereich des Reifens seitlich verschoben und hierdurch abgerieben.

Um diese Problem zu beheben, weisen bekannte Einfahrhilfen zusätzlich zu am Boden befestigten, V-förmig angeordneten Führungsrollen eine quer zur Transportrichtung beweglich gelagerte Bodenplatte oder sogenannte Einweiserplatte auf. Ein auf der Einweiserplatte befindlicher Reifen wird beim Anfahren an eine Führungsrolle somit nicht auf dem Boden verschoben, sondern bewegt sich zusammen mit der Einweiserplatte quer zur Transportrichtung. Die Einweiserplatte reicht hierzu quer zur Transportrichtung auch in den Bereich der Fahrspur für die Reifen der anderen Fahrzeugsseite, oder es ist dort eine weitere Einweiserplatte vorgesehen.

Gleichwohl besteht auch bei dieser Einfahrhilfe das Problem, dass es bei zu schnellem oder zu steilem Anfahren an eine Führungsrolle nach wie vor zu Quetschungen oder Beschädigungen der Reifen kommen kann. Zudem ist der dadurch verursachte heftige Stoß unangenehm für die Fahrzeuginsassen.

Da aus Platzgründen die Einfahrt vieler Fahrzeugwaschanlagen nicht gerade, sondern gekrümmt ist, fährt selbst bei geradem Einfahren des vorderen Reifens in die gewünschte Fahrspur der Fördereinrichtung ohne Anfahren an einer Anfahrrolle der nachlaufende hintere Reifen des Fahrzeugs schräg zur Fahrspur in den Einfahrbereich ein. Da der Fahrzeugführer den hinteren Reifen nicht sehen kann und er über die Fahrzeuglenkung keinen unmittelbaren Einfluss auf die Stellung des hinteren Reifens nehmen kann, schlägt der hintere Reifen oft relativ stark an einer oder beiden Anlaufrollen an. Es besteht somit die Gefahr von Reifenbeschädigungen, zumindest des hinteren Reifens. Hinzu kommt, dass bei ungünstiger Stellung des hinteren Reifens dieser zwar durch die Anlaufrollen in die Fahrspur gezwungen wird, aber so nahe an einem seitlichen Rand der Fahrspur geführt wird, dass er an einer randseitigen Führung der Fördervorrichtung entlangschleift und beschädigt wird.

Eine oben beschriebene bekannte Einfahrhilfe in einer Fahrzeugwaschanlage offenbart die US 2008/0028974. Dort weist die Einfahrhilfe eine Rollenanordnung auf, deren Drehachsen in Transportrichtung des Fahrzeugs verlaufen und zur seitlichen Verschiebbarkeit des Fahrzeugs dienen. Im Bereich dieser Rollenanordnung sind unbewegliche Führungsschienen trichterförmig angeordnet, welche zusammen mit der Rollenanordnung zum Einführen eines Fahrzeugreifens in den Transportbereich dienen.

Eine ähnliche Lösung offenbart US2006/0219127 A1, bei der mehrere, trichterförmige Führungsschienen in unterschiedlichen Höhen im Einfahrbereich montiert sind. Eine weitere ähnliche Lösung offenbart US2006/0225601 A1, bei der die Führungsschienen im Einfahrtsbereich nicht trichterförmig, sondern bogenförmig gekrümmt angeordnet sind. Eine solche Konstruktion geht auch aus US 3 832 953 hervor. Auch bei diesen Lösungen können Beschädigungen der Reifen und Felgen durch harte Stöße oder Entlangschleifen beim Anfahren an die Führungsschienen nicht sicher vermieden werden.

Der Erfindung liegt deshalb die Aufgabe zugrunde, eine Einfahrhilfe und eine Fahrzeugbehandlungsanlage zu schaffen, welche die oben genannten Nachteile überwinden und eine beschädigungsfreie und bezüglich der gewünschten Fahrspur der Fördereinrichtung mittige Positionierung von Reifen eines zu behandelnden Fahrzeugs ermöglicht.

Diese Aufgabe wird durch eine Einfahrhilfe mit den Merkmalen des Anspruchs 1 sowie eine Fahrzeugsbehandlungsanlage mit den Merkmalen des Anspruchs 13 gelöst. Vorteilhafte Ausgestaltungen und zweckmäßige Weiterbildungen der Erfindung sind in den Unteransprüchen angegeben.

Eine erfindungsgemäße Einfahrhilfe ist dadurch gekennzeichnet, dass die Führungselemente zwischen einer Anfahrstellung, in der sie in Transportrichtung aufeinander zulaufend in die Fahrspur reichen, und einer Durchfahrstellung, in der sie die Fahrspur seitlich begrenzen, hin und her bewegbar sind. Hierdurch können die durch das Anfahren der Führungselemente verursachten Stöße abgemildert und die Gefahr von Beschädigungen des Reifens deutlich verringert werden.

In einer vorteilhaften Weiterbildung ist jedem Führungselement ein Rückstellantrieb zugeordnet, um die Führungselemente nach dem Durchfahren eines Reifens in die Anfahrstellung zurückbewegen zu können. Hierdurch wird sichergestellt, das die Führungselemente sofort wieder zum Anfahren mit einem weiteren Reifen, sei es ein hinterer Reifen des gleichen oder der vordere Reifen eines anderen Fahrzeugs, in die Anfahratellung zurückgebracht werden.

Vorteilhaft kann die vom Rückstellantrieb auf das Führungselement aufgebrachte Rückstellkraft einstellbar sein, z. B. durch Vorgabe einer von der Auslenkung der Führungselemente aus der Anfahrstellung abhängigen Rückstellkraft. In einer vorteilhaften Weiterbildung kann die Rückstellkraft durch Verwendung pneumatisch oder hydraulisch betätigbarer, einfach oder doppelwirkender Rückstellzylinder in einem weiteren Bereich frei eingestellt werden.

Eine erfindungsgemäße Fahrzeugbehandlungsanlage kann vorteilhaft als Fahrzeugwaschanlage ausgebildet sein und ist dadurch gekennzeichnet, dass sie eine gemäß obiger und nachfolgender Beschreibung ausgebildete und in den Ansprüchen angegebene Einfahrhilfe aufweist.

Weitere Besonderheiten und Vorzüge der Erfindung ergeben sich aus der folgenden Beschreibung von bevorzugten Ausführungsbeispielen anhand der Zeichnungen. Es zeigen:
- **Fig. 1**: eine Draufsicht auf einen Ausschnitt einer Fahrzeugbehandlungsanlage mit erfindungsgemäßer Einfahrhilfe in einer Anfahrstellung;
- **Fig. 2**: die Draufsicht aus Fig. 1 mit der Einfahrhilfe in einer Durchfahrstellung;
- **Fig. 3**: die Draufsicht aus Fig. 1 mit den in Fig. 1 und 2 gezeigten Stellungen der Einfahrhilfe;
- **Fig. 4**: eine Draufsicht entsprechend Fig. 3 auf eine alternative Ausgestaltung einer erfindungsgemäßen Einfahrhilfe.

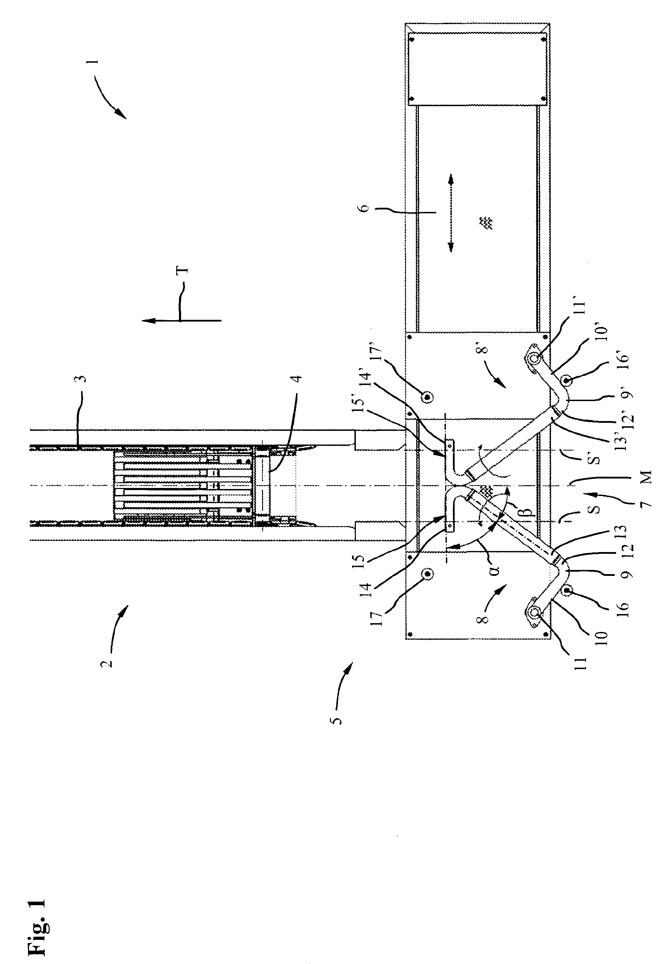

Fig. 1 zeigt einen Einfahrbereich einer als Kraftfahrzeugwaschanlage ausgebildeten Fahrzeugbehandlungsanlage 1 mit einer an sich bekannten Fördereinrichtung 2 zum Transport eines zu waschenden Fahrzeugs in einer Transportrichtung T durch die Fahrzeugbehandlungsanlage 1. Von der Fördereinrichtung 2 ist in den Zeichnungen lediglich im Einfahrbereich gezeigt. Die Fördereinrichtung 2 nimmt mit einer von einer Förderkette 3 geführten Schlepprolle 4 einen nicht gezeigten Reifen des Fahrzeugs von hinten in Eingriff und schleppt es dann in die Transportrichtung T durch die Fahrzeugbehandlungsanlage 1. Symmetrisch zu einer in Transportrichtung T verlaufenden gedachten Mittellinie M begrenzen gedachte Seitenlinien S, S' eine gewünschte Fahrspur 7 für den Reifen, in der er beschädigungsfrei durch die Fördereinrichtung 2 geschleppt werden kann..

Unmittelbar vor der Fördereinrichtung 2 ist eine erfindungsgemäße Einfahrhilfe 5 mit einer an sich bekannten, quer zur Transportrichtung T beweglich gelagerten Bodenplatte 6 angeordnet.

Im Einfahrbereich der Fahrzeugbehandlungsanlage 1 sind symmetrisch zur Mittellinie M zwei Führungselemente 8, 8' angeordnet. Da die Führungselement 8, 8' identisch ausgebildet sind, werden sie nachfolgend anhand des in den Zeichnungen linken Führungselements 8 beschrieben, Bezugszeichen des rechten Führungselements 8' entsprechen denen des linken Führungselements 8 mit einem Apostroph.

Das Führungselement 8 weist einen Rollenbügel 9 auf, der an seinem in Transportrichtung T vorderen Enden einen L-förmig abgewinkelten L-Schenkel 10 aufweist. Der L-Schenkel 10 ist mit seinem freien Ende an einem Drehgelenk 11 mit einer senkrecht auf dem Boden bzw. der Bodenplatte 6 stehenden Drehachse drehbar angelenkt, so dass das Führungselement 8 in einer im wesentlichen parallel zur Bodenplatte 6 verlaufenden Ebene zwischen der Anfahrstellung und der Durchfahrstellung hin und her bewegbar ist.

Auf einem sich an den L-Schenkel 10 anschließenden Rollenschenkel 12 des Rollenbügels 9 ist eine Anfahrrolle 13 um die Längsachse des Rollenschenkels 12 drehbar gelagert. Die Funktion der Anfahrrolle 13 entspricht der Funktion der bekannten Anfahrrollen.

An seinem anderen, in Transportrichtung T hinteren Ende weist der Rollenbügel 9 einen hackenförmig zum freien L-Schenkel 10 hin weisenden Anschlagschenkel 14 auf. Der Anschlagschenkel 14 bildet in der in Fig. 1 gezeigten Anfahrstellung des Rollenbügels 9 einen Rückrollanschlag 15 für einen bereits in Transportrichtung T hinter der Einfahrhilfe 2 befindlichen Reifen.

Um einen einfahrenden Reifen, der sich nicht in der gewünschten Fahrspur 7 befindet, in die Fahrspur 7 zu drücken, werden die Rollenbügel 9, 9' von unterhalb der Drehgelenke 11, 11' befindlichen, in den Zeichnungen nicht sichtbaren Rückstellantrieben in Form von Rückstellfedern stets zur Mittellinie M bzw. zur Fahrspur 7 hin gedrückt. Hierdurch wirkt eine quer zur Transportrichtung T in Richtung Mittellinie M gerichtete Kraftkomponente auf den Reifen, der dann zusammen mit der Bodenplatte 6 in Richtung der Fahrspur 7 bewegt wird. Vorteilhaft weisen die Rückstellantriebe auch energieverzehrende Dämpfungselemente auf, welche die vom Reifen auf die Führungselemente 8, 8' ausgeübte Kraft dämpfen.

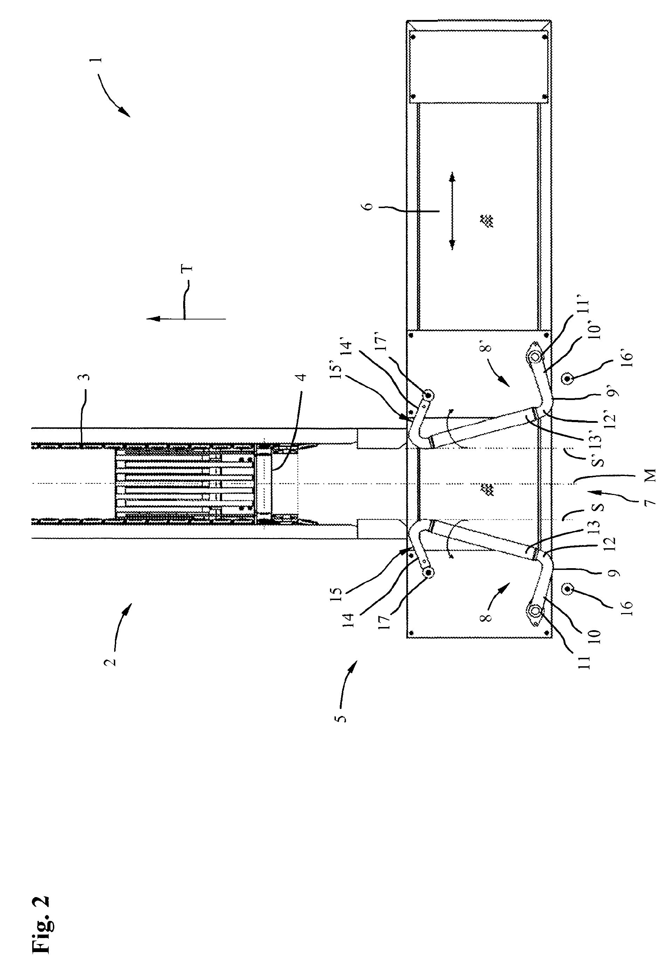

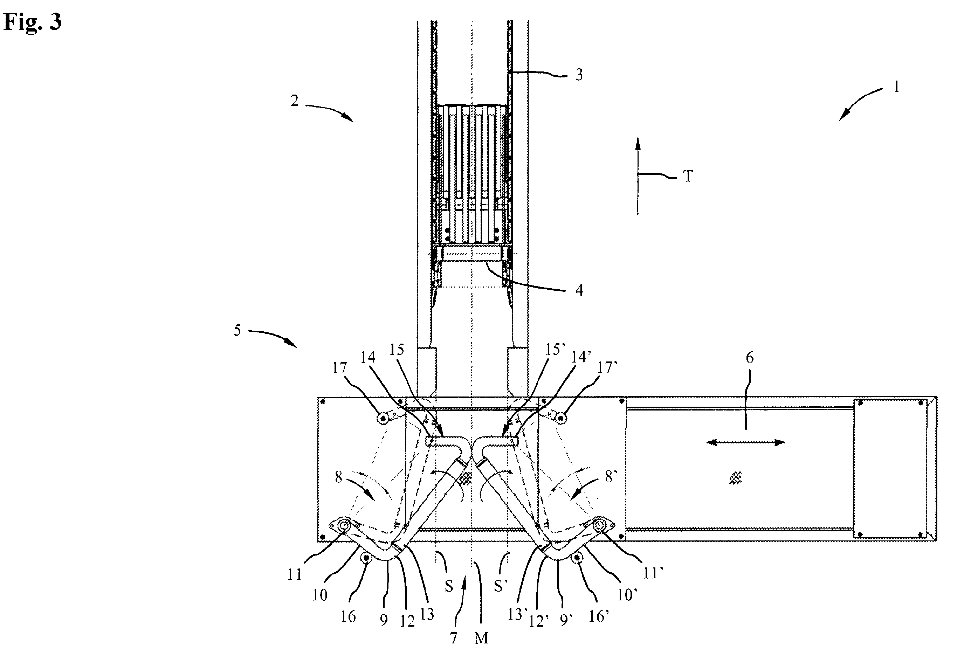

Die Rückstellkraft der Rückstellantriebe ist dabei vorteilhaft so eingestellt, dass sie bei zunehmender Auslenkung der Rollenbügel 9, 9' aus der Anfahrstellung immer größer wird. Bei der in Fig. 1 bis 3 gezeigten Ausführung beträgt die Rückstellkraft in der in Fig. 1 gezeigten Anfahrstellung am beweglichen Anschlagende 14, 14' der Rollenschenkel 12, 12' ca. 100 N, während sie kurz vor der Durchfahrstellung nach Fig. 2 ca. 800 N beträgt.

Ein weit von der Mittellinie M außerhalb der Fahrspur 7 befindlicher Reifen wird somit mit größerer Kraft zur Fahrspur 7 hin bewegt als ein nur geringfügig von der Mittellinie M abweichender Reifen, da er einen der Rollenbügel 9, 9' sehr stark aus der Anfahrstellung auslenkt. Hierdurch wird einerseits eine schnelle Zentrierung des Reifens bezüglich der Mittellinie M gewährleistet, was aufgrund des kurzen Fahrwegs von Einfahrhilfe 5 bis zur Fördereinrichtung 2 vorteilhaft ist, während andererseits die auf den Reifen aufgebrachte Kraft so gering wie möglich ist, um eine Beschädigung des Reifens oder der Reifenseitenwand zu vermeiden.

Die Rückstellantriebe stellen zudem sicher, dass vor dem Einfahren eines Reifens, sei es der hintere Reifen des gleichen Fahrzeugs oder der vordere Reifen des nächsten Fahrzeugs, die Rollenbügel 9, 9' wieder in die Anfahrstellung zurückgeführt werden. Es kann somit insbesondere auch der hintere Reifen eines Fahrzeugs beschädigungsfrei in die Fahrspur 7 gebracht werden.

Weiter sind in Transportrichtung T vor der Bodenplatte 6 Anfahranschläge 16, 16' für die Rollenbügel 9, 9' vorgesehen, gegen die die L-Schenkel 10, 10' in der Anfahrstellung, bewirkt durch die Rückstellkraft der Rückstellantriebe, anschlagen. Hierdurch wir dein Verhaken oder Verkanten der Rollenbügel 9, 9' vermieden und die in Fig. 1 gezeigte symmetrische Anfahrstellung sichergestellt. Zudem wird dadurch gewährleistet, dass die Rückrollanschläge 15, 15' in der Anfahrstellung gehalten werden, so dass ein entgegen der Transportrichtung rollendes Fahrzeug nicht mehr aus dem Einfahrbereich herausrollen kann, da der in Transportrichtung T bereits hinter der Einfahrhilfe 5 befindliche Reifen durch die Rückrollanschläge 15, 15' gestoppt wird. Dies verhindert vorteilhaft Beschädigungen an der Fördereinrichtung 2, an der Reifen und auch am Fahrzeug. Denn nachdem der Reifen in der zum Abschleppen mit der Schlepprolle 4 vorgesehenen Stellung positioniert ist, wird normalerweise der Fahrzeugantrieb ausgeschaltet und die Feststellbremse des Fahrzeugs gelöst, damit die Schlepprolle 4 den Reifen und das Fahrzeug mitschleppen kann. Würde das Fahrzeug in der Zeit bis zum Eingreifen der Schlepprolle 4 jedoch zurückrollen, so könnte es z.B. den Zuförderweg der Schlepprolle blockieren oder auf ein in Transportrichtung T hinter ihm stehendes Fahrzeug, dass nachfolgend gewaschen werden soll, auffahren.

Vorteilhaft ist hierzu ein in Fig. 1 gezeigter Winkel α zwischen Ruckrollanschlag 15 und Rollenschenkel 12 des Rollenbügels 9 so gewählt, dass er sich mit einem Winkel β zwischen Rollenschenkel 12 in der Anfahrstellung und Mittellinie M zu 90° addiert. Der Rückrollanschlag 15 und der identisch ausgebildete Rückrollanschlag 15' verlaufen dann in der Anfahrstellung quer zur Transportrichtung T und bilden somit eine große Anschlagfläche für einen Reifen aus.

In der in Fig. 2 gezeigten Durchfahrstellung begrenzen die Rollenbügel 9, 9' die Fahrspur 7 seitlich, so dass ein durchfahrender Reifen in der Fahrspur 7 geführt wird und nicht an seitliche Teile der Fördereinrichtung 2 anfahren kann. Um zu verhindern, dass die Rollenbügel 9, 9' vom durchfahrenden Reifen aus der Durchfahrstellung herausgedrückt werden, sind in Transportrichtung T hinter den Drehgelenken 11, 11' Durchfahranschläge 17, 17' angeordnet, an welche die freien Enden der Anschlagschenkel 14, 14' anschlagen.

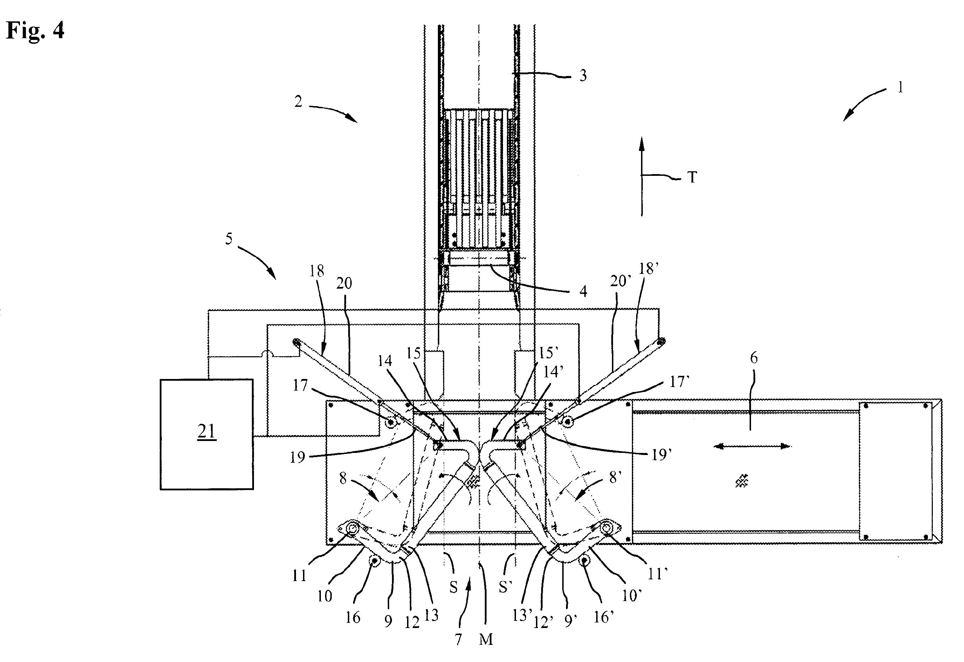

Die in Fig. 4 gezeigte alternative Ausführung einer erfindungsgemäßen Einfahrhilfe 2 unterscheidet sich im wesentlichen durch die Ausbildung des Rückstellantriebs von der in Fig. 1 bis 3 gezeigten Ausführung. Es werden deshalb für gleiche Teile gleiche Bezugszeichen verwendet und vor allem auf die Unterschiede eingegangen.

In der Ausführung nach Fig. 4 werden die Rückstellantriebe der beiden Rollenbügel 9, 9' durch steuerbare, doppelwirkende Pneumatikzylinder 18, 18' gebildet. Hierbei sind Kolbenstangen 19, 19' der Pneumatikzylinder 18, 18' an den freien Enden der Anschlagschenkel 14, 14' drehbar angelenkt, während feststehende Zylinder 20, 20' an der Einfahrhilfe 5 oder einem anderen Teil oder Bereich der Waschanlage 1 angelenkt sind. Angesteuert werden die Pneumatikzylinder 18, 18' in an sich bekannter Weise durch eine Pneumatiksteuerung 21.

Mittels dieser Pneumatikzylinder 18, 18' kann die Rückstellkraft auf die Rollenbügel 9, 9' innerhalb eines weiten Bereichs beliebig eingestellt werden. Beispielsweise kann die Rückstellkraft in allen Bereichen von Anfahrstellung bis Durchfahrstellung größer gewählt werden, wenn eine schweres Fahrzeug mit breiten und großen Reifen in die Einfahrhilfe einfährt. Bei einem leichten Fahrzeug hingegen wird die Rückstellkraft kleiner gewählt. Auch kann bei dieser Ausführung vorteilhaft auf die Anfahranschläge 16, 16' und/oder die Rückrollanschläge 17, 17' verzichtet werden, da die Rollenbügel 9, 9' durch die Pneumatikzylinder 18, 18' in ihren Stellungen in Anfahr- bzw. Durchfahrstellung gehalten werden können. Durch die Pneumatikzylinder 18, 18' kann somit auf einfache Weise die Rückstellkraft in unterschiedlichen Auslenkungsbereichen der Rollenbügel 9, 9' an die gewünschten Anforderungen angepasst werden.

In einer weiteren, nicht gezeigten Ausführung können anstelle der in Fig. 4 gezeigten doppelwirkenden Zylindern 18, 18' auch einfachwirkende Pneumatikzylinder verwendet werden, die die Rückstellkraft in Richtung der Anfahrstellung auf die Rollenbügel 9, 9' aufbringen können.

In einer weiteren, nicht gezeigten Ausführung kann vorteilhaft die quer zur Transportrichtung T beweglich gelagerte Bodenplatte 6 auch durch andere Mittel realisiert werden, die eine Verschiebung der Reifen eines einfahrenden Fahrzeugs und somit des einfahrenden Teils des Fahrzeugs selbst erlauben. So können anstelle der Bodenplatte 6 im Einfahrbereich des Fahrzeugsreifens, der von der Einfahrhilfe erfasst werden soll, auch mehrere Längsrollen nebeneinander vorgesehen werden, deren Drehachsen im wesentlichen in Transportrichtung T verlaufen. Fährt der Reifen des Fahrzeugs dann auf diese Längsrollen auf, kann er seitlich verschoben werden. Bevorzugt können in den Einfahrbereichen beider gleichzeitig einfahrenden Reifen des Fahrzeugs derartige Längsrollen vorgesehen werden, so dass beim Einfahren beide Reifen quer zur Transportrichtung bewegt werden können.

Anstelle der vorstehend beschriebenen Rückstellantriebe mit Rückstellfedern oder Pneumatikzylindern können auch andere geeignete Antriebe, z.B. Hydraulikzylinder, verwendet werden, die die Rückstellkraft wie oben beschrieben bereitstellen können.

## Patentansprüche

1. Einfahrhilfe (5) für eine zum Transport eines zu behandelnden Fahrzeugs in einer Transportrichtung (T) durch eine Fahrzeugbehandlungsanlage (1) vorgesehene Fördereinrichtung (2), mit einer in Transportrichtung (T) verlaufenden, für Reifen des Fahrzeugs vorgesehenen Fahrspur (7), einer quer zur Transportrichtung (T) beweglichen Bodenplatte (6) und zwei zumindest teilweise über der beweglichen Bodenplatte (6) in Transportrichtung (T) aufeinander zulaufenden Führungselementen (8, 8'), **dadurch gekennzeichnet, dass** die Führungselemente (8,8') zwischen einer Anfahrstellung, in der sie in Transportrichtung (T) aufeinander zulaufend in die Fahrspur (7) reichen, und einer Durchfahrstellung, in der sie die Fahrspur (7) seitlich begrenzen, hin und her bewegbar sind.

2. Einfahrhilfe (5) nach Anspruch 1, **dadurch gekennzeichnet, dass** jedem Führungselement (8, 8') ein Rückstellantrieb (18, 18') zum Bewegen des Führungselements (8, 8') in die Anfahrstellung zugeordnet ist.

3. Einfahrhilfe (5) nach Anspruch 2, **dadurch gekennzeichnet, dass** eine vom Rückstellantrieb (18, 18') auf das Führungselement (8, 8') aufgebrachte Rückstellkraft mit zunehmender Auslenkung des Führungselements (8, 8') aus der Anfahrstellung zunimmt.

4. Einfahrhilfe (5) nach Anspruch 2 oder 3, **dadurch gekennzeichnet, dass** die vom Rückstellantrieb (18, 18') auf das Führungselement (8, 8') aufgebrachte Rückstellkraft einstellbar ist.

5. Einfahrhilfe (5) nach einem der voranstehenden Ansprüche, **dadurch gekennzeichnet, dass** der Rückstellantrieb eine Rückstellfeder aufweist, die das Führungselement (8, 8') in die Anfahrstellung drückt.

6. Einfahrhilfe (5) nach einem der voranstehenden Ansprüche, **dadurch gekennzeichnet, dass** der Rückstellantrieb einen pneumatisch oder hydraulisch betätigbaren Rückstellzylinder (18, 18') aufweist.

7. Einfahrhilfe (5) nach einem der voranstehenden Ansprüche, **dadurch gekennzeichnet, dass** die Führungselemente (8, 8') jeweils an ihrem in Transportrichtung (T) vorderen Ende (10, 10') an einem Drehgelenk (11, 11') mit einer im wesentlichen senkrecht zur Bodenplatte (6) verlaufenden Drehachse angelenkt sind.

8. Einfahrhilfe (5) nach Anspruch 7, **dadurch gekennzeichnet, dass** jedem Führungselement (8, 8') ein in Transportrichtung (T) vor dem Drehgelenk (11, 11') liegender Anfahranschlag (16, 16') zugeordnet ist.

9. Einfahrhilfe (5) nach Anspruch 7 oder 8, **dadurch gekennzeichnet, dass** jedem Führungselement (8, 8') ein in Transportrichtung (T) hinter dem Drehgelenk (11, 11') liegender Durchfahranschlag (17, 17') zugeordnet ist.

10. Einfahrhilfe (5) nach einem der voranstehenden Ansprüche, **dadurch gekennzeichnet, dass** die Führungselemente (8, 8') um eine im wesentlichen parallel zur Bodenplatte (6) verlaufende Drehachse drehbare Anfahrrollen (13, 13') aufweisen.

11. Einfahrhilfe (5) nach einem der voranstehenden Ansprüche, **dadurch gekennzeichnet, dass** die Führungselemente (8, 8') an ihrem in Transportrichtung (T) hinteren Ende (14, 14') jeweils einen in der Anfahrstellung der Führungselemente (8, 8') in die Fahrspur (7) reichenden Rückrollanschlag (15, 15') aufweisen.

12. Einfahrhilfe (5) nach Anspruch 11, **dadurch gekennzeichnet, dass** die Rückrollanschläge (15, 15') in Anfahrstellung der Führungselemente (8, 8') quer zur Transportrichtung (T) verlaufen.

13. Einfahrhilfe (5) nach einem der voranstehenden Ansprüche, **dadurch gekennzeichnet, dass** zum Verschieben der Reifen des einfahrenden Fahrzeugs quer zur Transportrichtung anstelle der Bodenplatte (6) mehrere Längsrollen nebeneinander vorgesehen sind, deren Drehachsen im wesentlichen in Transportrichtung (T) verlaufen.

14. Fahrzeugbehandlungsanlage (1), insbesondere Fahrzeugwaschanlage, mit einer Fördereinrichtung (2) zum Transport eines zu behandelnden Fahrzeugs in einer Transportrichtung (T) durch die Fahrzeugbehandlungsanlage (1), wobei in Transportrichtung (T) vor der Fördereinrichtung (2) eine Einfahrhilfe (5) mit einer in Transportrichtung (T) verlaufenden, für Reifen des Fahrzeugs vorgesehenen Fahrspur (7), einer quer zur Transportrichtung (T) beweglichen Bodenplatte (6) und zwei zumindest teilweise über der beweglichen Bodenplatte (6) in Transportrichtung (T) aufeinander zulaufenden Führungselementen (8, 8') angeordnet ist, **dadurch gekennzeichnet, dass** die Einfahrhilfe (5) nach einem der voranstehenden Ansprüche ausgebildet.

## Claims

1. Drive-in aid (5) for a conveyor (2) provided by a vehicle treatment installation (1) for transporting a vehicle to be treated in a transport direction (T), with a track (7) running in the transport direction (T) provided for tyres of the vehicle, a base plate (6) which can be moved transversely to the transport direction (T) and two guiding elements (8, 8') which converge in the transport direction (T) and extend at least partly over the movable base plate (6), **characterised in that** the guiding elements (8, 8') can be moved to and fro between a starting position in which they converge in the transport direction (T) and extend into the track (7), and a drive-through position in which they bound the track (7) laterally.

2. Drive-in aid (5) according to claim 1, **characterised in that** each guiding element (8, 8') has an associated resetting drive (18, 18') for moving the guiding element (8, 8') into the starting position.

3. Drive-in aid (5) according to claim 2, **characterised in that** a resetting force applied by the resetting drive (18, 18') to the guiding element (8, 8') increases as the deflection of the guiding element (8, 8') out of the starting position increases.

4. Drive-in aid (5) according to claim 2 or 3, **characterised in that** the resetting force applied by the resetting drive (18, 18') to the guiding element (8, 8') is adjustable.

5. Drive-in aid (5) according to one of the preceding claims, **characterised in that** the resetting drive exhibits a resetting spring which presses the guiding element (8, 8') into the starting position.

6. Drive-in aid (5) according to one of the preceding claims, **characterised in that** the resetting drive exhibits a resetting cylinder (18, 18') which can be actuated pneumatically or hydraulically.

7. Drive-in aid (5) according to one of the preceding claims, **characterised in that** in each case at their front end (10, 10') in the transport direction (T) the guiding elements (8, 8') are articulated at a pivot joint (11, 11') with a pivot axis running essentially perpendicularly to the base plate (6).

8. Drive-in aid (5) according to claim 7, **characterised in that** each guiding element (8, 8') has an associated contact stop (16, 16') lying in front of the pivot joint (11, 11') in the transport direction (T).

9. Drive-in aid (5) according to claim 7 or 8, **characterised in that** each guiding element (8, 8') has an associated drive-through stop (17, 17') lying behind the pivot joint (11, 11') in the transport direction (T).

10. Drive-in aid (5) according to one of the preceding claims, **characterised in that** the guiding elements (8, 8') exhibit contact rollers (13, 13') which are rotatable about a rotation axis running essentially parallel to the base plate (6).

11. Drive-in aid (5) according to one of the preceding claims, **characterised in that** at their rear end (14, 14') in the transport direction (T) the guiding elements (8, 8') each exhibit a roll-back stop (15, 15') which extends into the track (7) in the starting position of the guiding elements (8, 8').

12. Drive-in aid (5) according to claim 11, **characterised in that** in the starting position of the guiding elements (8, 8') the roll-back stops (15, 15') run transversely to the transport direction (T).

13. Drive-in aid (5) according to one of the preceding claims, **characterised in that** in order to move the tyres of the vehicle driving in transversely to the transport direction, in place of the base plate (6) there are a plurality of longitudinal rollers which are arranged next to one another with their rotation axes running essentially in the transport direction (T).

14. Vehicle treatment installation (1), in particular vehicle washing installation, with a conveyor (2) for transporting a vehicle to be treated in a transport direction (T) through the vehicle treatment installation (1), wherein arranged in front of the conveyor (2) in the transport direction (T) there is a drive-in aid (5) with a track (7) running in the transport direction (T) provided for tyres of the vehicle, a base plate (6) which can be moved transversely to the transport direction (T), and two guiding elements (8, 8') which converge in the transport direction (T) and extend at least partly over the movable base plate (6), **characterised in that** the drive-in aid (5) is embodied according to one of the preceding claims.

## Revendications

1. Auxiliaire d'accès (5) pour un dispositif de convoyage (2) prévu aux fins du transport d'un véhicule à traiter dans une direction de transport (T) par une installation de traitement de véhicule (1), comprenant une piste (7) s'étendant dans la direction de transport (T) et prévue pour les pneumatiques du véhicule, une plaque de fond (6) mobile de manière transversale par rapport à la direction de transport (T) et deux éléments de guidage (8, 8') convergeant l'un vers l'autre dans la direction de transport (T) au moins en partie au-dessus de la plaque de fond (6) mobile, **caractérisé en ce que** les éléments de guidage (8, 8') peuvent être déplacés en va-et-vient entre une position de départ, dans laquelle ils parviennent sur la piste (7) en convergeant l'un vers l'autre dans la direction de transport (T), et une position de passage, dans laquelle ils délimitent latéralement la piste (7).

2. Auxiliaire d'accès (5) selon la revendication 1, **caractérisé en ce qu'**un mécanisme de rappel (18, 18') servant à déplacer l'élément de guidage (8, 8') dans la position de départ est associé à chaque élément de guidage (8, 8').

3. Auxiliaire d'accès (5) selon la revendication 2, **caractérisé en ce qu'**une force de rappel appliquée par le mécanisme de rappel (18, 18') sur l'élément de guidage (8, 8') augmente au fur et à mesure que la déviation de l'élément de guidage (8, 8') hors de la position de départ augmente.

4. Auxiliaire d'accès (5) selon la revendication 2 ou 3, **caractérisé en ce que** la force de rappel appliquée par le mécanisme de rappel (18, 18') sur l'élément de guidage (8, 8') peut être réglée.

5. Auxiliaire d'accès (5) selon l'une quelconque des revendications précédentes, **caractérisé en ce que** le mécanisme de rappel présente un ressort de rappel qui pousse l'élément de guidage (8 8') dans la position de départ.

6. Auxiliaire d'accès (5) selon l'une quelconque des revendications précédentes, **caractérisé en ce que** le mécanisme de rappel présente un cylindre de rappel (18, 18') pouvant être actionné de manière pneumatique ou hydraulique.

7. Auxiliaire d'accès (5) selon l'une quelconque des revendications précédentes, **caractérisé en ce que** les éléments de guidage (8, 8') sont respectivement articulés par leur extrémité avant (10, 10') dans la direction de transport (T) au niveau d'une articulation de rotation (11, 11') dotée d'un axe de rotation s'étendant essentiellement de manière perpendiculaire par rapport à la plaque de fond (6).

8. Auxiliaire d'accès (5) selon la revendication 7, **caractérisé en ce qu'**une butée de départ (16, 16') se trouvant devant l'articulation de rotation (11, 11') dans la direction de transport (T) est associée à chaque élément de guidage (8, 8').

9. Auxiliaire d'accès (5) selon la revendication 7 ou 8, **caractérisé en ce qu'**une butée de passage (17, 17') se trouvant derrière l'articulation de rotation (11, 11') dans la direction de transport (T) est associée à chaque élément de guidage (8, 8').

10. Auxiliaire d'accès (5) selon l'une quelconque des revendications précédentes, **caractérisé en ce que** les éléments de guidage (8, 8') présentent des rouleaux de départ (13, 13') pouvant tourner autour d'un axe de rotation s'étendant essentiellement de manière parallèle par rapport à la plaque de fond (6).

11. Auxiliaire d'accès (5) selon l'une quelconque des revendications précédentes, **caractérisé en ce que** les éléments de guidage (8, 8') présentent, au niveau de leur extrémité arrière (14, 14'), dans la direction de transport (T), respectivement une butée à rouleaux de recul (15, 15') parvenant sur la piste (7) dans la position de départ des éléments de guidage (8, 8').

12. Auxiliaire d'accès (5) selon la revendication 11, **caractérisé en ce que** les butées à rouleaux de recul (15, 15') s'étendent de manière transversale par rapport à la direction de transport (T) lorsque les éléments de guidage (8, 8') se trouvent dans la position de départ.

13. Auxiliaire d'accès (5) selon l'une quelconque des revendications précédentes, **caractérisé en ce que** sont prévus de manière juxtaposée, en lieu et place de la plaque de fond (6), afin de déplacer par coulissement les pneumatiques du véhicule entrant de manière transversale par rapport à la direction de transport, plusieurs rouleaux longitudinaux, dont les axes de rotation s'étendent essentiellement dans la direction de transport (T).

14. Installation de traitement de véhicule (1), en particulier installation de lavage de véhicule; comprenant un dispositif de convoyage. (2) servant au transport d'un véhicule à traiter dans une direction de transport (T) par l'installation de traitement de véhicule (1), sachant qu'un auxiliaire d'accès (5), doté d'une piste (7) s'étendant dans la direction de transport (T), prévue pour les pneumatiques du véhicule, d'une plaque de fond (6) mobile de manière transversale par rapport à la direction de transport (T) et de deux éléments de guidage (8, 8') convergeant l'un vers l'autre dans la direction de transport (T) au moins en partie au-dessus de la plaque de fond (6) mobile, est disposé dans la direction de transport (T) devant le dispositif de convoyage (2), **caractérisée en ce que** l'auxiliaire d'accès (5) est réalisé selon l'une quelconque des revendications précédentes.
